# EUROPEAN PATENT APPLICATION

(11) **EP 0 623 714 A1**
(43) Date of publication of application: **09.11.1994**
(21) Application number: 94106949.4
(22) Date of filing: 04.05.1994
(51) Int. Cl.: E04F 13/14, E04C 2/04, E04C 2/38, B29C 67/18

(54) **Slabs and plate-like products of natural stone useful for coverings, method and apparatus for their production**

(30) Priority: 06.05.1993 IT PD930099
(71) Applicant: TONCELLI, Marcello, I-36061 Bassano Del Grappa (Vicenza) (IT)
(72) Inventor: TONCELLI, Marcello, I-36061 Bassano Del Grappa (Vicenza) (IT)
(74) Representative: Dragotti, Gianfranco

(57) **Abstract**

Slabs and plate-like products in form of tiles, mopboards and baseboards (40) of natural stones particularly granite, marble and porphyry are produced carrying out, in one of the surface (44) of the slab coming from the sawing operation by which the thickness of the slab is set less than 10mm., a grid pattern of reinforcing elements or members (46) of synthetic material anchored to slots or grooves carried out in said surface of said slab, said synthetic material being set in said slots, and then carrying out the usual manufacturing and finishing operations for natural stones on the face intended to remain visible of said slab whereafter, if desidered, the slab is cut into plate-like products at the meshes of said grid pattern, so that said plate-like products have a continuous or discontinuous framing of said reinforcing synthetic material; the framing is of triangular or rectangular cross-section with the maximum thickness near the outside edge of the plate-like product.

## Description

The present invention relates to new plate-like products of stone material, particularly granite, marble, porphyry and the like, useful for floorings and coverings of building works, as well as to a method and an apparatus for its execution.

In the following description particular reference is made to granite and building floorings but it is obvious that this description has only an illustrative purpose and in any circumstance must not be intended in a limitative sense.

For some time the industry of the materials for building floorings and particularly for residential buildings decidely tends towards elements of small thickness, the surface of which is already finished before the laying down so that only the laying is necessary.

The small thickness (which in the present invention means a thickness not greater than 10 mm.) causes a reduction of material weight together with consequent advantages in terms both of transport expenses and of handling and thus of a greater easiness and rapidity for the laying.

Nowadays, the modern design for buildings constantly tends to take it into account the existence of flooring materials, not only of thin thickness (such as for example the ceramic tiles) but also of thickness consistent with the thickness of the different materials which may be used.

In fact, several advantages of economic and technical kind result from this approach.

Firstly and principally, it is possible in this way to prepare only one laying bed lying on one level to be covered (upon the building works, as well as painting and installation works, are finished) with the selected flooring materials, thus permitting to postpone the choice of the materials and then their differentiation, depending on the intended purpose of the rooms and on the end user's preferences without the past influences caused by the differences of thickness from one material to another which sometimes is considerable and thereby permitting all the materials to be fixed by glueing onto the laying plane.

Obviously the term glueing means in general to have the covering material adhering to the laying plane in a permanent way and with a prefixed detaching resistence.

However, to date, this technique has prevalently used particular covering materials such as ceramic tiles, wood lists (parquet), moquette, synthetic or natural rubber slabs, plastic material slabs. As it may be easily noted, all these materials may be manufactured with a small thickness maintaining the handling resistence necessary both for the transport and for the laying operations as well as, obviously, for the finishing operations and therefore these materials have taken advantage and development by this designing technical approach.

It is not presently necessary to list the drawbacks which may be attributed to the above-mentioned utilized materials by a not only aesthetic but also and especially, structural viewpoint.

For example, the ceramic material can be easily chipped and in addition is considerably fragile.

On the other hand, the parquet is subject to "movements" that each list may undergo owing to temperature and/or humidity variations, whereby the raising of the parquet from the laying bottom and the consequent detaching of each list are not rare.

In the case of moquette the main problem is the hygienic poorness together with its easiness to get stained.

For centuries natural stones and in particular the granite achieved a great success as a worthy and select flooring material, not only for the special ornament that may derive from said material (since this is available in almost an infinite range of colours, textures and designs in the world-wide field), but also and especially for the exceptional properties of mechanical resistance, hardness, staining resistance and etchings by particularly harmful chemical agents, as well as weather agents. Furthermore, this material retains the initial polishing for a long time and may be polished again after the laying down.

However, the attempts aiming at the use of this material as well as of other natural stones in form of plate-like products of thin thickness, already polished or otherwise finished before the laying, irremediably clashed with the intrinsic fragility of this raw material in the state of thin plate-like product.

Although it is possible to obtain slabs of reduced thickness from blocks by various mechanical expedients and modern machines for the processing of marble and stones, when these slabs of reduced thickness are cut out into plate-like products of the right size the further operations before the laying are irremediably hindered owing to the fragility of these slabs.

The edges and the corners are consequently indented and chipped and the amount of wastes due to breackages during packaging, trasport and laying operations is considerable.

Therefore, from an also economic viewpoint, it is industrially very onerous to obtain stone tiles of the market appreciated size, such as for example 30x30 and 40x40 centimetres and about 10 mm. thick.

In fact, already with this thickness the waste products easily achieve the 30% and this is unacceptable taking into account that the waste is composed of material already processed which has already undergo most or even all the manufacturing and transforming operations.

On the contrary, the thickness of the stone tiles should preferably be less than 10 mm. to compete with the other above-mentioned covering materials.

Bearing in mind the already cited great avaibility of granite all over the world, it is evident that the production of tiles of traditional size, having thickness less than 10 mm., preferably about 7-8 mm. thick, may have and has an industrial interest.

The main object of the present invention is to provide plate-like products, in the form of slabs and tiles or similar elements, of natural stone material by which the problems and drawbacks as shortly above mentioned are substantially overcome in a industrially advantageous way from the point of view of both the manufacturing and the use according to the above-cited designing approach.

A more specific object of the present invention is to provide a slab-like product of finished thickness not greater than 12 mm., especially 7-8 mm., of natural stone material, product which can be used as it is or processed into plate-like products of reduced size of the type traditionally used in the covering field.

Another equally important object of the present invention is to provide plate-like products of stone material of a thickness not greater than 12 mm., in particular thickness of 7-8 mmm., of the traditional size of the plate-like products for use as building coverings specifically flooring tiles of usual form, baseboards, mopboards, etc.

A further more specific object of the present invention is to provide a method and the relevant apparatus for the production of the above-mentioned slabs and plate-like products.

These and other objects are achieved by the present invention which, in its most general form, provides a slab of natural stone, sawn with a of thickness not greater than 13 mm., characterized in that in one of its surfaces, preferably the rear surface thereof opposite to front one, namely that remaining visible after being laid down, reinforcing members of synthetic material are inserted, said members being permanently anchored in slots or grooves provided in said surface according to a grid pattern with a mesh size not greater than the maximum size of a tile-like article possibly obtainable from said slab.

In a preferred embodiment of the present invention there is provided a plate-like product in form of tile of stone material characterized in that the product is of finished thickness not greater than 12 mm. and by being provided in one of its surfaces and along its whole edge, with a continuous peripheral framing of synthetic reinforcing material firmly anchored to the stone material, said framing being preferably of maximum thickness less than that of said plate-like product.

According to a first way of carrying out said preferred embodiment, said framing is of an essentially triangular section in the shape of a right-angled triangle, the framing having the maximum thickness in the position adjacent to the edge of the plate-like product.

According to a second way of carrying out said preferred embodiment, said framing is of a rectangular section.

According to another preferred embodiment of the present invention there is provided a plate-like product of rectangular contour useful as mopboard or baseboard having a framing, extending along a portion of said rectangular contour, consists of synthetic reinforcing material firmly anchored to said stone material, said framing being of an essentially triangular cross-section shape like a right-angled triangle, or of a rectangular cross-section shape.

In another embodiment of the slab according to the present invention, the slab is provided with reinforcing linear members, possibly crossing each other and placed within each mesh, said linear members consisting of synthetic reinforcing material firmly anchored in corresponding grooves provided in said surface of said slab.

According to another feature of the present invention, there is provided a method for the production of the above-mentioned plate-like products, characterized by the following operations:
a) engraving a grid pattern of slots or grooves of a desired cross-section, in one surface of a stone slab of a thickness not greater than 10mm, as coming out from the sawing operation, each mesh of said grid being of a size not greater than the maximum size of the tile which is possibly obtained from the slab itself;
b) filling said slots or grooves with reinforcing synthetic material capable of being firmly anchored to the stone material forming said slab;
c) once said reinforcing synthetic material has been set, carrying out, if desired, on said slab cutting operations to obtain plate-like products corresponding to the meshes of said grid pattern, and the usual finishing operations of the surface of said slab which shall form the surface in view of the final wall or floor covering.

In the preferred embodiment of the method according to the present invention said engraving is carried out by forming slots or grooves of V-shaped cross section with very spreaded apart flanks and said cutting operation is carried out at the plane of symmetry of said V-shaped slots or grooves, whereby the peripheral framing of the final plate-like product is of triangular shape.

Finally, according to still another feature of the present invention, there is provided an apparatus for the manufacturing of the slabs and plate-like products as previously defined, characterized by comprising, in a standard manufacturing and finishing line for plate-like products such as slabs and tiles of stone material, a first forming station wherein a grid pattern of slots or grooves is engraved in one surface of each slab coming from a sawing frame, said first station being positioned immediately downstream of the apparatus for the sawing of natural stone blocks into slabs of the desired thickness, said grid pattern having meshes of size not greater than the maximum size of the plate-like product in the shape of tile possibly obtainable from said slab; a second station for the casting into said slots or grooves of a reinforcing synthetic material which can be firmly anchored to the stone material forming said slabs; a third station for the setting and/or drying of said reinforcing members of synthetic material and a station for the cutting of said slab into plate-like products in order to have a peripheral frame at least partially consisting of said reinforcing members of synthetic material, the latter station being possibly inoperative so that the slab maintains a size greater than the size of the meshes of said grid pattern, said latter station being possibly positioned downstream of the usual machines for levelling, sizing, lapping and polishing the front face of the slabs.

These and other features and advantages of the present invention will appear more clearly from the following detailed description, which has an exemplifying but not limitative purpose, with reference to the accompanying drawings in which:
- fig.1 is a schematic view of the surface of a slab produced according to the present invention;
- fig.2 is a similar view of another embodiment of the slab according to the invention:
- fig.3 is a plan view of a tile-like product showing in particular the rear surface;
- fig. 4 is a partial view of one of the peripheral edges of the tile of figure 3 seen in the direction of arrow IV of figure 5;
- fig. 5 is a cross-section view of the tile of fig.3 according to the viewing plane V-V of fig.3;
- fig.6 is a view similar to fig.3 of a variant of a tile according to the invention;
- fig.7,8,9,10,11 and 12 are views similar to fig.3 of further variants of tiles and other plate-like products according to the invention;
- fig.13,14 and 15 are views similar to fig.3 of other embodiments of plate-like products according to the invention;
- fig 16,17,18,18,20 and 21 are partly cutaway views of the edge of tiles according to the invention showing different embodiments;
- fig. 22 is a partial view of another embodiment of a plate-like product according to the invention;
- fig.23,24,25,26,27,28,29,30,31 and 32 are schematic representations of the steps and main stations of the method and of the apparatus for the manufacturing of slabs and plate-like products according to the present invention.

Referring now to figures 3,4 and 5 there is shown one of the preferred plate-like products according to the present invention consisting of a tile 40 which has a front face 42 which remains visible after the tile has been laid down and a rear face or surface 44. In this example the tile 40 is made of granite and it is of the most common usual size for the flooring of residencial buildings, that is 40x40 cm.

In this specific case the tile 40 is 8 mm. thick and it is provided with a reinforcing framing 46 of synthetic material along the whole perimeter.

This material is selected among settable plastic materials which, at the same time, can be anchored to stone materials like granite, marble, porphyry, etc.

Among the plastic materials, particularly suitable for this purpose, there are to be pointed out the epoxy resins settable by heat and/or by room temperature with addition of a hardener.

The plastic material forming the reinforcing members 46 may be used in the pure state or added or loaded with materials of different nature, colour, shape and appearance and/or reinforced with fibrous, mineral, organic, inorganic, metallic materials and the like.

In this regard there is also to be taken into account a very important feature of the material forming the member or framing 46, namely the coefficient of linear expansion.

In fact, when this coefficient is greatly different from the one of the stone material, it is important to take few expedients in order to avoid improper and tensile stresses in the final plate-like product. For example it is sufficient to interrupt the continuity of the framing 46 in order to prevent in this way that the sum of the different dilatations on the different parts forming the framing itself originate the above-mentioned tensive stresses even if the dilatations are individually small in size.

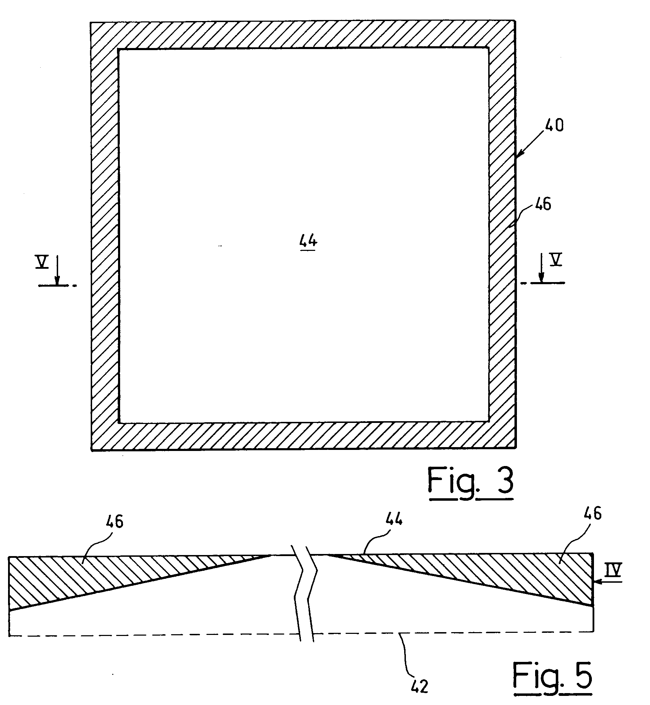

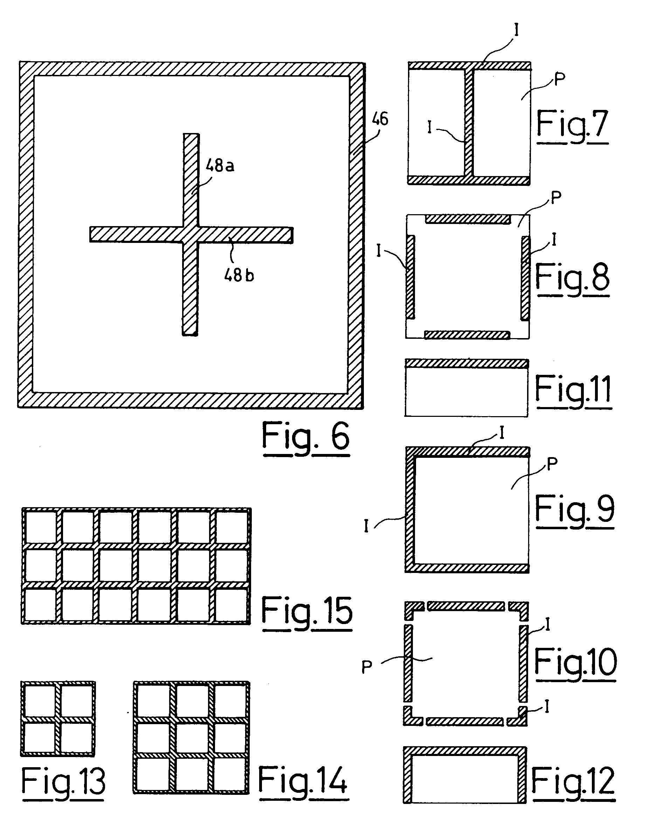

From the cross-section of fig.5 it is possible to note that the cross-section form of the member 46 is triangular, and this represents the preferred embodiment for the manufacturing process of tiles in consequence of the subsequently explained reasons.

In order to quantify the effectiveness of the use of the framing 46 in a plate-like product of the type illustrated in figures 3,4 and 5, the results are reported of tests for the assessment of the average flexural strength modulus measured both in the presence and in the absence of a framing or reinforcing member.

The test has been effected on 2 cm. wide and 7.5 thick specimens taken from tiles of granite of absolute black Africa grade with and without the reinforcing framing. In the case of the presence of the framing, the latter consists of a mixture comprising 40 parts by volume of epoxy resin and 60 parts by volume of thin silica and powder.

From the testing carried out four specimens, it has been found that the flexural strength modulus increases from 225 kg/sq.cm. in the absence of framing, to 540 kg/sq.cm. in the presence of a framing 2.5 cm. wide and of the above-mentioned composition.

In fig.6 there is shown a variant of the same tile of fig.3 in which, when the size of the tile exceeds the size of 40x40 or also 50x50 cm., a central member or reinforcing element is provided, which in the specific case is represented by two linear members 48a and 48b with a crossing arrangement.

It is evident that the arrangement of members 48, as well as the form of the cross-section thereof, may be different.

Finally, it is to be pointed out that there nothing prevents from producing the framing 46 of a certain reinforcing synthetic material and the members 48a and 48b of a different synthetic material.

In figures 7,8,9 and 10 there are represented other embodiments of tiles similar to those of fig.3 with different possible arrangements of the peripheral reinforcing members in which, in the specific case the perimetral pattern is not continuous and the choice of the variant depends on the specific conditions of utilization as well as on the type of stone material and on the properties of the reinforcing synthetic material.

In all these representations the reference P represents the stone part whereas the reference I indicates the reinforcing element or member of synthetic material.

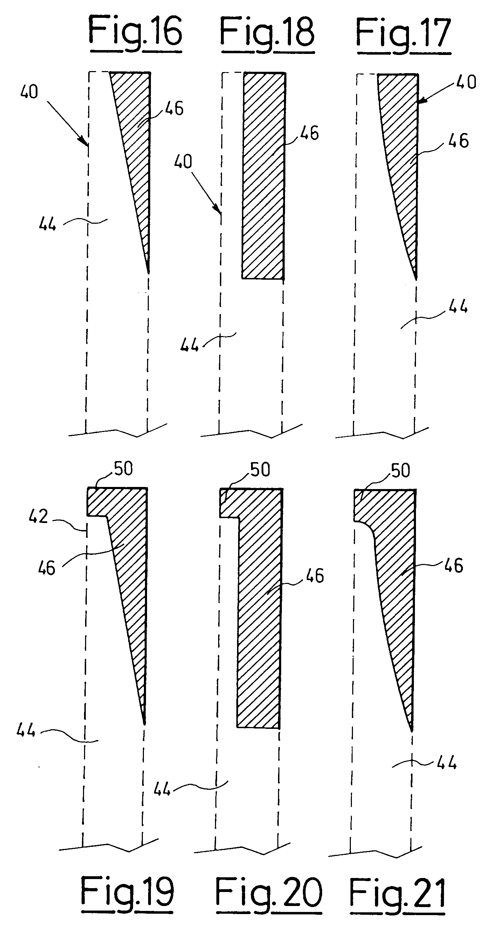

Furthermore, the representations of figures 13, 14 and 15 refer to plate-like products of greater size which vary from 60x60 cm., for the plate-like product of fig.13, to a size of 120x120 cm. for the one of fig.14, and to a size of 240x120 cm. for the one of fig.15. It is evident that these are only exemplifying representations in that there are possible and foreseen even embodiments different in size and form.

In all these embodiments it can be easily noted that, when the mesh size of 30x30 cm. or even 40x40 cm. is exceeded, the basic mesh, as that represented in figure 3, is multiplied as many times as the number of multiples of the basic mesh, so that substantially the final plate-like product is always provided with a peripheral framing which consists of the reinforcing element or member of synthetic material, continuous or discontinuous according to the choice taken during the designing according to the previously mentioned criterion.

The choice of the type and size of the reinforcing grid pattern necessarily depends even on the type of utilization of the final plate-like product. For example, in the case of the flooring for residencial buildings it is evident that the plate-like products undergo slight stresses, whereby each plate-like product must be reinforced with the previously described framing. However, if the flooring is used for industrial buildings, such as for example for sheds (in this case the natural stone being for example porphyry), the grid pattern will be provided with smaller meshes so as to increase the resistence to the stresses acting on the laid down flooring elements.

In this regard one of the basic features of the present invention is to be pointed out, that will be more appreciated when dealing with the method and the apparatus for the manufacturing of plate-like products of the invention.

This feature consists in that the reinforcing grid pattern of plastic material is provided in a slab coming from the sawing operation, carrying out in the same slab, by means of entirely traditional technics, the slots or grooves suitable for receiving the reinforcing plastic material and, immediately after, filling with the above-cited reinforcing plastic material the slots or grooves themselves, preferably by casting, the plastic material being then hardened and set into the thus arranged seats.

In this way the slab coming from the sawing operation, which is thin (of thickness even less than 10 mm.), is immediately reinforced so that it may be transferred to all the following processing operations, whereby the breakages or, anyhow imperfections, that normally cause the discart (clipping of the edges, etc.) even in the case of slabs of a greater thickness, are substantially eliminated.

A second feature, equally important from an industrial viewpoint, is that the grid pattern is selected according to the dimensional features of the slab, namely by subdividing its surface into squares corresponding to the different types of desired and, at the same time, obtainable plate-like products so that an optimum exploitation of the slab is achieved.

Once this choice is taken and thus the division of the surface is determined, the engravings corresponding to the slots or grooves for receiving the reinforcing elements or members of plastic material are carried out.

Finally, this reinforced slab, once it has appropriately been finished along the external edges and upon all the finishing operations are completed, is suitable, as it is, for the use as covering material for large surfaces, such as for example the outer walls of residencial or commercial buildings without it being necessary to carry out the subdivision into smaller plate-like products.

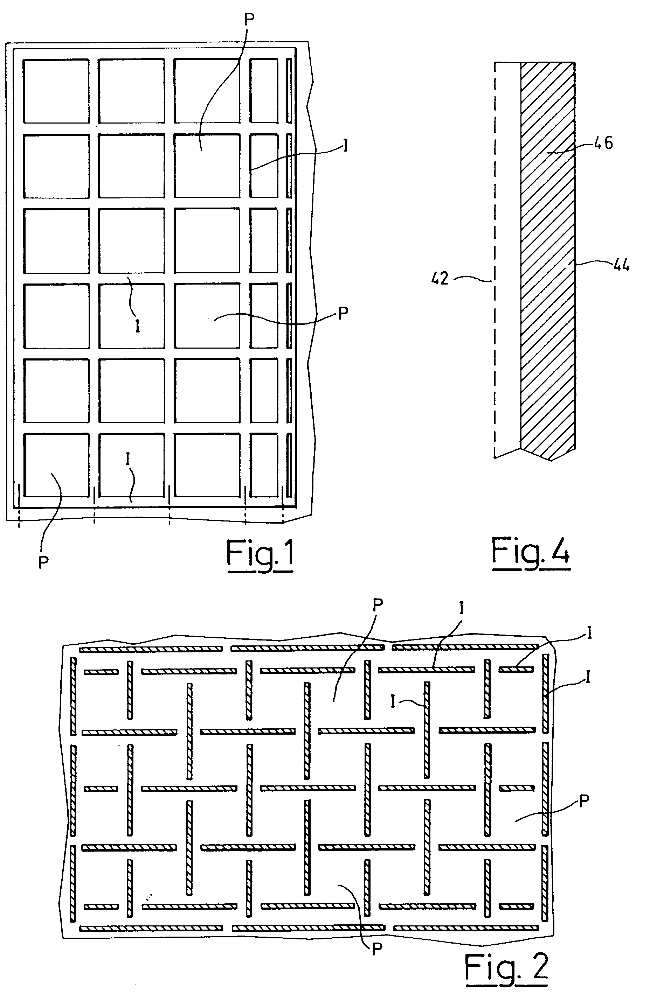

Fig.1 just represents an embodiment of the slab reinforced in this way and the references P and I therein respectively indicate the natural stone parts and the reinforcing members of plastic material.

Fig.2 shows a variant of the same slab more specifically intended to be used without cutting out the same into smaller plate-like products, and also in this case, the references P and I have the above-cited meanings.

Turning now to figures 16-21, there are represented the different possible cross-section shapes of the reinforcing members of plastic material. It is evident that these representations do not intend to exhaust the possible forms which can be used from time to time, also depending on particular structural requirements or in relation to the characteristics of the reinforcing plastic material.

In the embodiment of fig.16 the member 46 is of a triangular cross-section shape like a right-angled triangle in which the side of greater size is just situated at the edge of the plate-like product or tile 40. In this way, just at the area in which the risk of breakages and chippings is maximum, the reinforcing material is of the greatest thickness.

In the embodiment of fig.17, the cross-section shape is substantially the same, except that the hypotenuse of the cross-section triangle is of curvilinear form.

In the embodiment of fig.18 the member 46 is of rectangular cross-section form. In this case, the operation of providing the corresponding slots or grooves in the initial slab is difficult but the final slab and plate-like product have a greater resistence.

In the representation of figures 19, 20, and 21, the same cross-section shapes, of figures 16, 18 and 17 respectively, are reproduced and completed with a peripheral edge in which the member 46 is flush with the visible surface or face 42 of the slab 40.

In this case it is evident that each plate-like product will be completed with a peripheral framing visible also from the side of the surface 42 and this also means that, at the end of the casting and setting of the reinforcing plastic material, the operation of cutting the plate-like product into smaller plate-like products will only involve the reinforcing members of plastic material.

In this regard, it is to be noted that the previous description makes reference to reinforcing framing and grids of plastic material which do not remain visible from the side of the visible face that is the surface of the slab or plate-like product opposite to the one which during the laying is sticked and anchored to the support underneath the covering material.

It, however, does not mean that for particular realizations, for example when a particular aesthetical effect is desidered, the framings and the grid patterns in general may not form part of the visible face, namely the outside surface of the covering. Obviously, in this case the choice of the reinforcing plastic material forming the members and especially of the possible fillers (which are either coloured or not) of this plastic material shall take into account the desidered final aesthetical effect.

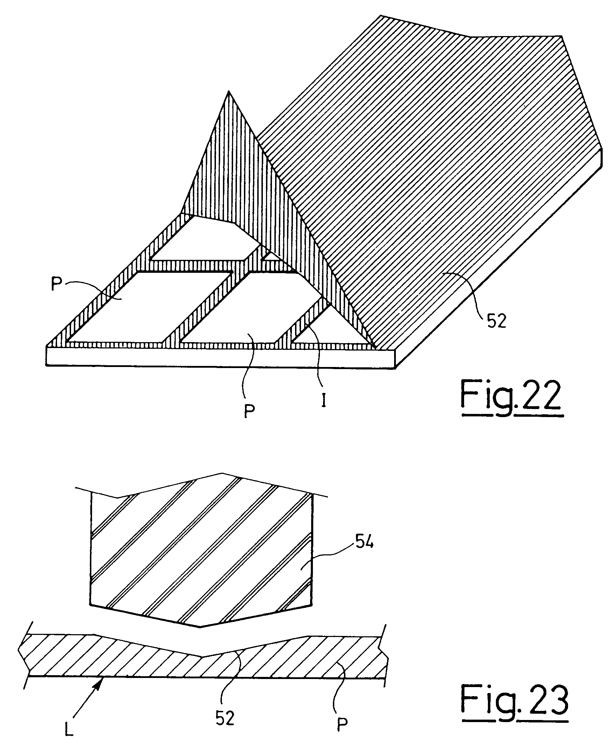

Finally, in the representation of fig.22 there is shown a further variant in which the face provided with a reinforcing grid patterns in turn is covered with a protection and further reinforcing sheet or layer 52; the sheet 52 may be formed for example of fibre glass (in the form of not woven textile) impregnated with polyester resin.

Obviously, the choice of this supplementary reinforcement is foreseable in the case that particular application requirements of the slab and/or plate-like products arise.

Now, there only remain to take it into account the method and the apparatus for the production of slabs and plate-like products according to the invention.

As already stated, from the sawing operation of the blocks of stone material it is possible to obtain slabs of desidered thickness which for the purpose of the invention must be less than 10 mm. and preferably about 7-8 mm.

After appropriate measurements have been effected and the number of plate-like products, which are desired and/or can be obtained from the slab itself, has been choosen, namely by fixing the size of the desired tiles, fixing the number of the same tiles which it is possible to obtain and finally using the residual surfaces to obtain, if desired, smaller plate-like products like mopboards or baseboards, this slab L is passed to the engraving station for carrying out of slots or grooves 54 which shall receive the reinforcing plastic material.

It is noteworthy that in this way it is possible during the manufacturing process to obtain mopboards or baseboards in form of lists, the lenght of which corresponds to the maximum size of the slab, with evident advantages especially from a laying viewpoint, in that the laid plate-like product has a remarkably reduced number of joints between adiacent lists, approaching in this way the real wood technology .

In fig.23 there is schematically represented an engraving tool or chisel 54 which is per se well-known and widely used in the stone processing, by which the slot or groove 52 is carried out corresponding to two cross-sections 46 joined along the vertices at the apex of the groove 52.

Obviously, a plurality of engraving tools is used by means of which a first series of parallel engravings along the whole lenght of the slab is carried out, after which the slab is rotated by 90° and the processing proceeds with the realization of engravings perpendicularly arranged with respect to the former in order to form the desired grid pattern.

The engraving tools shall be obviously mounted to adjustable supports so as to adjust the distance between two adiacent chisels and thus between two adiacent grooves to the desidered size of the desidered and choosen plate-like products.

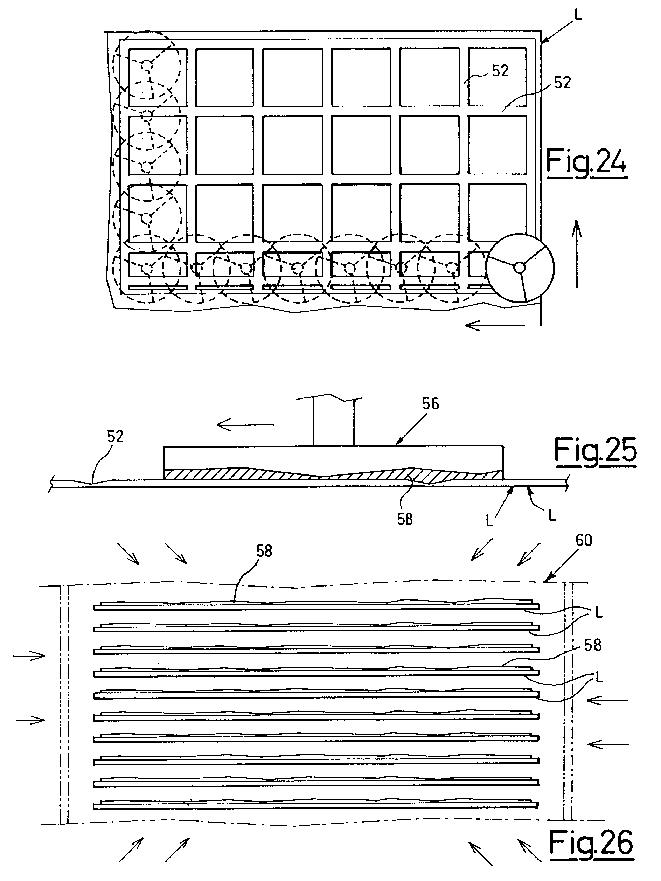

Once the engraving operation is finished, the slab L, provided with the grid pattern of slots or grooves 52, is transferred to the casting station of the composition of reinforcing plastic material, which is carried out as schematically indicated in figures 24 and 25 by means of a distributor 56 for the plastic material which fills the grooves 52 with a layer 58.

Obviously, the features and the type of device 56 depend on the properties and characteristics of the composition with which the filling of the slots 52 is carried out.

At the exit of the casting station, the slab L is transferred to a drying and setting station represented in figure 26 by a hot air forced circulation kiln 60 with temperature and pressure controlled in accordance with the characteristcs of the resin forming the filling of the grooves 52; as it is clearly illustrated in fig.26 the kiln has several floors although any other kind of kiln or apparatus for carrying out the drying and the setting of the plastic material which fills the grooves 52 may be likely used.

At the exit of the station consisting of the kiln 60, the raw slabs L are transferred to a station for the levelling of the laying face 44 of the final plate-like product, levelling represented by the levelling roller or cylinder 62 which, in a way per se known in the technical field, acts on the raw slab advancing in the direction of arrow F1 in order to eliminate unevennesses of the surface and a possible excess of plastic material deposited on the rear surface of the slab. A slab L1 is obtained at the exit of the levelling operation, slab in which only the slots or grooves 52 are substantially filled with the reinforcing plastic material which is already anchored to the inside surfaces of the slots themselves.

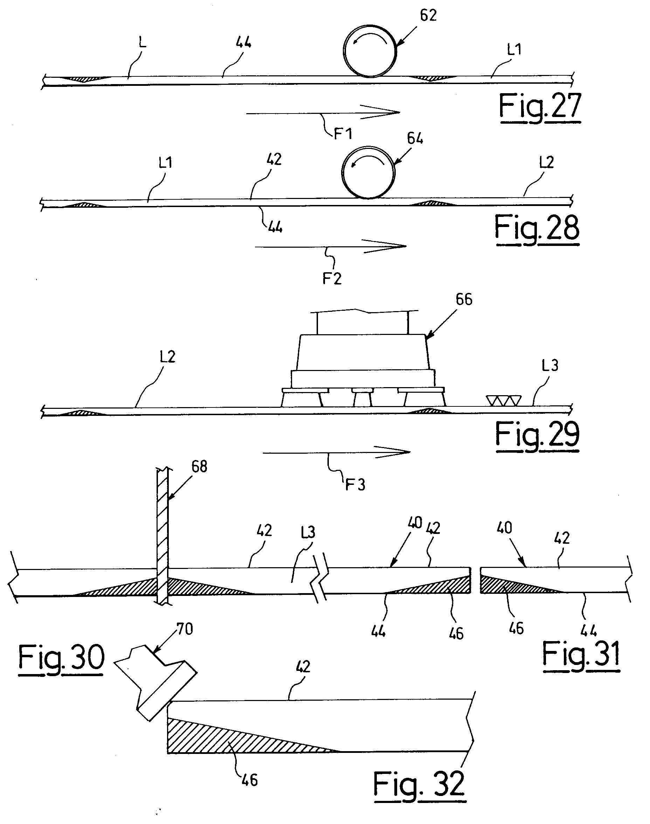

After the levelling operation, the slab L1 moves forward in the direction of arrow F2 (fig.28) to the following sizing operations of the visible face made by means of a sizing roller 64, which is per se known as well, obtaining a slab L2 which, in turn, is transferred to and moved in the direction of arrow F3 to the station of lapping and polishing of the visible face by means of a tool 66 thereby leading to the slab L3.

This is the slab which may be used as it is, after a squaring of the edges, or subdivided into plate-like products (tiles, mopboards and baseboards) initially identified on the initial slab through the arrangement of engraving slots or grooves.

In fig.30 there is represented this second case in which a cutting tool 68 operates on the visible face 42 at the center line of the slots or grooves 52, therefore the cut is carried out, first, in the thickness of residual stone and then, through the layer of the reinforcing plastic material anchored inside each slot or groove 52. By this operation the desired plate-like products are obtained, such as for example those indicated by the reference 40 in fig.3.

In fig.32 there is represented the last finishing operation consisting in the sizing and chamfering of the edges carried out by a tool 70 of the kind per se known in the technical field obviously working on the edges of the visible face 42.

From the previous description the advantages of the present invention shall be clear, which substantially affords the possibility of the production of slabs, tiles and other covering materials having the reduced thickness and handling characteristics of the usual covering materials such as for example ceramic or gres (which is also well-known with the name porcelainized gres) without their drawbacks such as fragility and however exploiting the advantageous caracteristics of the natural stone materials and particularly of the granite to which this utilization was substantially precluded until now.

With the present invention, in fact, the problems related to the production of plate-like products of granite and other natural stones are eliminated, problems that arised both during the processing operations of the slab and during the transport, handling and laying operations.

It is obvious that the method and the apparatus previously described do not intend to have a limitative purpose, in that other embodiments are possible and foreseeable in order to obtain both the slabs and the plate-like products of the present invention.

This particularly relates to the conditions of application of the framings and reinforcing members of plastic material, which for example might also be applied to the plate-like products already divided out from the slab, or preformed like a grid pattern and then applied to the slab by means of glueing.

Another equally important advantage of the present invention is that the traditional finishing operations of the plate-like products of natural stone may be carried out without substantially modifications, thereby using the pre-existent production lines, with huge savings from the industrial viewpoint.

Finally, it is not to be underestimated that using the rear face having the members as a visible face and, making an appropriate choice of the constituent and/or filling materials of the composition of reinforcing resin it is possible to obtain, also from stones, decorative and ornamental effects never obtained until now.

Finally, it is obvious that other conceptually and mechanically equivalent modifications and variants are possible and foreseeable without falling out from the object of the invention as specified in the following claims.

## Claims

1. Natural stone slab, characterized in that it is of a thickness not greater than 10mm and that reinforcing members of syntetic material are inserted in one of its surfaces, said members being permanently anchored in continuous or discontinuous slots or grooves provided in said surface according to a grid pattern with a mesh size not greater than the maximum size of a tile-like article possibly obtainable from said slab.

2. Slab according to claim 1, characterized in that said surface in which said reinforcing members are inserted is the rear surface of the slab opposite to front one, namely that remaining visible after being laid down.

3. Slab according to claim 1, characterized in that said thickness is of between 7 to 8 mm.

4. Slab according to claim 1, characterized in that said reinforcing synthetic material is a settable plastic material which can be anchored to the stone material forming said slab.

5. Slab according to claim 4, characterized in that said plastic material is an epoxy resin which can be set by heating and/or catalysis.

6. Slab according to claim 4, characterized in that said reinforcing plastic material is added and/or loaded with fillers, dyes and/or organic or inorganic fibrous materials.

7. Slab according to claim 6, characterized in that said fibrous materials consist of fibre glass or metal fibres.

8. Slab according to claims 5 and 6, characterized in that said reinforcing plastic material consists of a mixture of epoxy resin and powdered silica.

9. Slab according to each of the preceeding claims characterized in that said natural stone is selected among granite, marble, porphyry and the like.

10. Natural stone plate-like product, characterized by being of a thickness not greater than 10mm and by being provided, in one of its surfaces and along its whole edge, with a continuous peripheral framing of synthetic reinforcing material firmly anchored to the stone material.

11. Plate-like product according to claim 10, characterized in that said synthetic reinforcing material is as claimed in claims 4 to 8.

12. Plate-like product according to claim 10, characterized in that said natural stone is selected among granite, marble, porphyry and the like.

13. Plate-like product according to claim 10, characterized in that it is in the shape of a tile and in that said peripheral framing is of a maximum thickness less than the thickness of the plate-like product.

14. Plate-like product according to claim 10, characterized in that said framing is of an essentially triangular section in the shape of a right-angled triangle, the framing having the maximum thickness in the position adjacent to the edge of the plate-like product.

15. Plate-like product according to claim 10, characterized in that said framing is of a rectangular section.

16. Plate-like product according to claim 10 useful as mopboard or baseboard characterized in that it is of rectangular contour and it has a framing, extending along a portion of said rectangular contour, consists of synthetic reinforcing material firmly anchored to said stone material, said framing being of an essentially triangular cross-section shape like a right-angled triangle, or of a rectangular cross-section shape.

17. Slab according to claim 1, characterized in that it is provided with reinforcing linear members, possibly crossing each other and placed within each mesh, said linear members consisting of synthetic reinforcing material firmly anchored in corresponding grooves provided in said surface of said slab.

18. Plate-like product according to claim 10, characterized in that it has reinforcing linear members, possibly crossing each other, places within said framing, said linear members consisting of synthetic reinforcing material firmly anchored in corresponding grooves provided in said surface of said plate-like product.

19. Slab or plate-like product according to claim 17 and 18 respectively, characterized in that said reinforcing synthetic material is as claimed in claims 4 to 8.

20. Method for the production of slabs and/or plate-like products according to the previous claims, characterized by the following operations:
a) engraving a grid pattern of slots or grooves of a desired cross-section, in one surface of a stone slab of a thickness not greater than 10mm, as coming out from the sawing operation, each mesh of said grid pattern being of a size not greater than the maximum size of the tile which is possibly obtained from the slab itself;
b) filling said slots or grooves with reinforcing synthetic material capable of being firmly anchored to the stone material forming said slab;
c) once said reinforcing synthetic material has been set, carrying out, if desired, on said slab cutting operations to obtain plate-like products corresponding to the meshes of said grid pattern, and the usual finishing operations of the surface of said slab which shall form the surface in view of the final wall or floor covering.

21. Method according to claim 20, characterized in that said engraving is carried out by forming slots or grooves of V-shaped cross section with very spreaded apart flanks and said cutting operation is carried out at the plane of symmetry of said V-shaped slots or grooves, whereby the peripheral framing of the final plate-like product is of triangular shape.

22. Method according to claim 20, characterized in that said possible cutting operation to obtain plate-like products is carried out after the usual operation of levelling the face bearing said reinforcing members of synthetic material, said operations comprise sizing, lapping and polishing of said front face and before the sizing, chamfering the edges of the visible face.

23. Method according to claim 20, characterized in that said setting is carried out by means of a treatment in an kiln heated by a hot air forced circulation.

24. Apparatus for the manufacturing of the slabs and plate-like products as previously defined, characterized by comprising in a standard manufacturing and finishing line for plate-like products such as slabs and tiles of stone material, a first forming station wherein a grid pattern of slots or grooves is engraved in one surface of each slab coming from a sawing frame, said first station being positioned immediately downstream of the apparatus for the sawing of natural stone blocks into slabs of the desired thickness, said grid pattern having meshes of size not greater than the maximum size of the plate-like product in the shape of tile possibly obtainable from said slab; a second station for the casting into said slots or grooves of a reinforcing synthetic material which can be firmly anchored to the stone material forming said slabs; a third station for the setting and/or drying of said reinforcing members of synthetic material and a station for the cutting of said slab into plate-like products in order to have a peripheral frame at least partially consisting of said reinforcing members of synthetic material, the latter station being possibly inoperative so that the slab maintains a size greater than the size of the meshes of said grid pattern, said latter station being possibly positioned downstream of the usual machines for levelling, sizing, lapping and polishing the front face of the slabs.
